# EUROPEAN PATENT SPECIFICATION

(11) **EP 2 706 252 B1**
(45) Date of publication and mention of the grant of the patent: **01.10.2014**
(21) Application number: 13181780.1
(22) Date of filing: 27.08.2013
(51) Int. Cl.: F16D 25/08, F16D 23/12

(54) **Clutch device and straddle-type vehicle including the same**
Kupplungsvorrichtung und Grätschsitzfahrzeug damit
Dispositif d'embrayage et véhicule de type à enfourcher comprenant celui-ci

(30) Priority: 11.09.2012 JP 2012199425
(43) Date of publication of application: 12.03.2014
(73) Proprietor: Yamaha Hatsudoki Kabushiki Kaisha, Iwata-shi, Shizuoka 438-8501 (JP)
(72) Inventor: Tsuboi, Hidekazu, Iwata-shi, Shizuoka 438-8501 (JP)
(74) Representative: Grünecker, Kinkeldey, Stockmair & Schwanhäusser

(56) References cited:
- DE-A1-102005 056 026
- JP-A- S61 109 919
- US-A- 3 443 673
- US-A- 4 393 907

## Description

The present invention relates to clutch devices and straddle-type vehicles including the clutch devices.

A clutch device including a clutch and a clutch operation mechanism that operates the clutch is conventionally known.

Examples of such a clutch device is disclosed in JP-A-08-219171 or in US 4,393,907, for example.

The clutch device disclosed in JP-A-08-219171 is installed on a vehicle such as a two-wheeled vehicle. The clutch device includes: a clutch shaft extending from an inner position to an outer position in a vehicle width direction; a pressure disk that engages and disengages a clutch by moving in an axial direction of the clutch shaft; a clutch release rack fixed to the pressure disk; a pinion shaft that intermeshes with the clutch release rack; and a clutch release arm attached to a tip portion of the pinion shaft. The pinion shaft serves as an example of an operation shaft that engages and disengages the clutch by being rotated. The pinion shaft passes through a clutch cover. The pinion shaft includes an outer portion located outward of the clutch cover. A wire is connected to the outer portion of the pinion shaft via the clutch release arm.

The pressure disk is urged inward in the axial direction of the clutch shaft by a spring. The clutch is engaged by a force of the spring. Upon pulling of the wire, the pinion shaft is rotated, and the clutch release rack moves outward in the axial direction of the clutch shaft. With this movement, the pressure disk also moves outward in the axial direction of the clutch shaft, thus disengaging the clutch. When a force that pulls the wire is lost, the pressure disk is urged inward in the axial direction of the clutch shaft by the spring. As a result, the clutch is engaged.

A mechanism that disengages a clutch by pulling a pressure disk with the use of a member located outward of a clutch shaft in this manner will hereinafter be referred to as an "outer-pull-type clutch operation mechanism".

Usually, a relatively large force is necessary in order to pull a pressure disk. Therefore, in a conventional clutch operation mechanism that uses a wire, the wire might unfortunately be elongated due to its long-term use, which disadvantageously causes a considerable degradation in the wire over time. A clutch device may be used in various temperature environments. In particular, a clutch device of a straddle-type vehicle is used at a high temperature during running of the vehicle in summer season, but is used at a low temperature immediately after the start of running of the vehicle in winter season. A wire might be elongated or contracted due to a significant change in temperature, and therefore, elongation of the wire must be taken into consideration. Hence, a conventional clutch operation mechanism that uses a wire still has room for improvement in terms of stabilization of clutch operability which is degraded by wire elongation or wire degradation over time.

It is conceivable that an attempt may be made to solve the above-mentioned problems by utilizing an engine, installed on a conventional vehicle such as a two-wheeled vehicle, as it is. However, in particular, a two-wheeled vehicle or the like equipped with a conventional outer-pull-type clutch operation mechanism that uses a wire has difficulty in achieving stabilization of clutch operability while utilizing a conventional structure by changing the clutch operation mechanism into a different clutch operation mechanism that uses no wire.

Accordingly, it is an object of the present invention to provide a clutch device including an outer-pull-type clutch operation mechanism capable of achieving stabilization of clutch operability.

According to the present invention said object is solved by a clutch device having the features of independent claim 1. Preferred embodiments are laid down in the dependent claims.

A clutch device according to a preferred embodiment of the present invention includes: a clutch cover; a clutch disposed inside the clutch cover; an operation shaft that includes an inner portion disposed inside the clutch cover and connected to the clutch, and an outer portion disposed outside the clutch cover, and that engages and disengages the clutch by being rotated; a pinion mounted on the outer portion of the operation shaft and provided with a groove; a rack including a groove that intermeshes with the groove of the pinion; and a hydraulic mechanism that moves the rack in a longitudinal direction of the rack.

It is taken the idea of using, instead of a wire, a hydraulic mechanism such as a hydraulic cylinder in an outer-pull-type clutch operation mechanism, with the aim of eliminating influence of wire elongation or wire degradation over time. Advantages of the use of a hydraulic mechanism include resistance to degradation over time and environmental change. However, an outer-pull-type clutch operation mechanism includes an operation shaft that engages and disengages a clutch by being rotated. Therefore, the operation shaft has to be rotated in order to engage and disengage the clutch. Actually, a hydraulic mechanism such as a hydraulic cylinder is a mechanism that moves a component such as a spool linearly. Hence, unlike an electric motor, a hydraulic mechanism does not generate a rotational force. In view of these facts, it is provided the rack and the pinion for conversion of a linear motion into a rotational motion between the hydraulic mechanism and the operation shaft. Specifically, the pinion is provided at the outer portion of the operation shaft, and the rack including the groove that intermeshes with the groove of the pinion is moved by the hydraulic mechanism. This structure prevents problems resulting from wire elongation or wire degradation over time which occurs in a conventional outer-pull-type clutch operation mechanism, i.e., an outer-pull-type clutch operation mechanism that uses a wire. Consequently, stabilization of clutch operability can be achieved. Furthermore, the rack and the pinion are disposed outward of the clutch cover, thus allowing the operation shaft to be rotated by the hydraulic mechanism that exerts a linear force. As a result, the hydraulic mechanism can be easily used in an outer-pull-type clutch operation mechanism.

According to one preferred embodiment of the present teaching, the clutch device preferably includes a container member that contains the rack and the pinion.

The pinion is larger in width than the rack. Therefore, the pinion is more likely to collide against other components than the rack. Furthermore, the intermeshing of the groove of the pinion and the groove of the rack might be degraded due to adhesion of dust or the like to the groove of the pinion or the groove of the rack. To cope with this, the rack and the pinion are contained in the container member, thus making it possible to proactively prevent collision of the pinion and the rack against other components, and degradation in intermeshing of the groove of the pinion and the groove of the rack caused by dust or the like.

According to another preferred embodiment of the present teaching, the clutch cover is preferably provided with an attachment hole. The clutch device preferably includes: a case that contains the clutch and is provided with an attachment hole; a fixture that is inserted into the attachment hole of the clutch cover and the attachment hole of the case, thus attaching the clutch cover to the case; and a support member that is attached to the container member or integral with the container member, thus supporting the container member. The support member is preferably provided with an attachment hole into which the fixture is to be inserted. The fixture is preferably inserted into the attachment hole of the clutch cover, the attachment hole of the case and the attachment hole of the support member, thus attaching the support member to the case along with the clutch cover.

Thus, the support member can be attached to the clutch cover or the case by utilizing the existing attachment holes used for attachment of the clutch cover to the case and by inserting the fixture into the attachment holes.

According to still another embodiment of the present teaching, the clutch device preferably includes: a case that contains the clutch; and a support member that is attached to the container member or integral with the container member, thus supporting the container member. The support member is preferably detachably attached to at least one of the clutch cover and the case.

By detachably attaching the support member to at least one of the clutch cover and the case, the container member that contains the pinion and the rack can be easily detached when maintenance is performed on the pinion or the rack or when the pinion or the rack is broken.

According to yet another preferred embodiment of the present teaching, the clutch device preferably includes: first and second support members that are attached to the container member or integral with the container member, thus supporting the container member; a first fixture for attachment of the first support member to the case or the clutch cover; and a second fixture for attachment of the second support member to the case or the clutch cover. The operation shaft is preferably disposed between the first and second fixtures when viewed in a direction perpendicular to an axial direction of the operation shaft and perpendicular to the longitudinal direction of the rack.

The container member is fixed to the case or the clutch cover by the first and second fixtures on opposite sides of the operation shaft. Hence, the container member can be fixed with stability.

According to still yet another preferred embodiment of the present teaching, the hydraulic mechanism preferably includes a cylinder main body, and a spool inserted into the cylinder main body. A portion of the spool preferably constitutes the rack.

Thus, since a portion of the spool of the hydraulic mechanism constitutes the rack, the number of components is reduced as compared with a case where a rack separate from the spool is attached to the spool, and in addition, the clutch device according to the present teaching can be easily fabricated.

According to another preferred embodiment of the present teaching, the clutch device preferably includes an actuator that drives the hydraulic mechanism.

In a conventional outer-pull-type clutch operation mechanism that uses a wire as in JP-A-08-219171, a clutch is disengaged by pulling the wire, and therefore, a large force is required to pull the wire. However, when the hydraulic mechanism is driven by the actuator, a force required for clutch disengagement can be reduced.

According to still another preferred embodiment of the present teaching, there is provided a straddle-type vehicle including the clutch device according to one of the preferred embodiments of the present teaching described above.

Thus, there is provided the straddle-type vehicle including the clutch device that includes an outer-pull-type clutch operation mechanism capable of improving clutch operability as described above.

### ADVANTAGEOUS EFFECTS OF INVENTION

Various embodiments of the present invention provide a clutch device including an outer-pull-type clutch operation mechanism capable of improving clutch operability.

### BRIEF DESCRIPTION OF DRAWINGS

FIG. 1 is a side view of a motorcycle according to a first preferred embodiment of the present teaching.
FIG. 2 is a cross-sectional view illustrating a clutch device according to the first preferred embodiment.
FIG. 3 is a cross-sectional view taken along the line III-III of FIG. 2 and illustrating a rack, a pinion and a hydraulic mechanism according to the first preferred embodiment.
FIG. 4 is a diagram illustrating a housing according to the first preferred embodiment which is attached to a clutch cover, with a portion of the housing being cut away.
FIG. 5 is a cross-sectional view illustrating a rack, a pinion and a hydraulic mechanism according to an alternative preferred embodiment of the present teaching.

### DESCRIPTION OF EMBODIMENTS

### First Preferred Embodiment

Hereinafter, preferred embodiments of the present teaching will be described. Note that matters which are other than those particularly mentioned herein and are necessary to carry out the present teaching may be grasped as set items by those skilled in the art on the basis of conventional techniques in this field. The present teaching may be carried out on the basis of contents disclosed herein and technical common knowledge in this field.

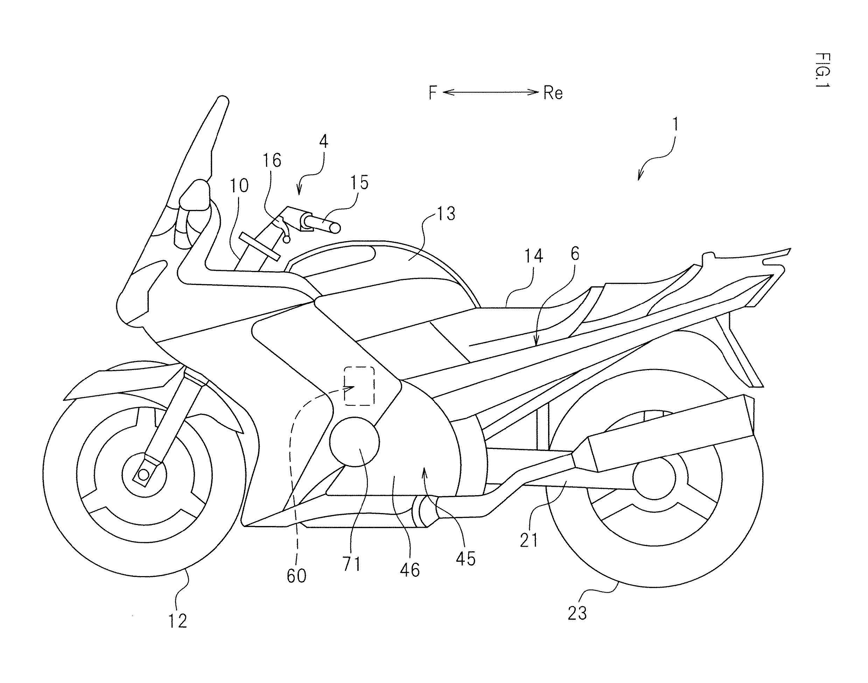

Hereinafter, a motorcycle including a clutch device according to the present teaching will be described with reference to the drawings. FIG. 1 is a side view illustrating a motorcycle 1. Note that herein, "front", "rear", "right" and "left" mean front, rear, right and left with respect to a rider sitting on a seat 14 described later, respectively. Reference signs "F" and "Re" used in the drawings represent front and rear, respectively.

The motorcycle 1 is an example of a straddle-type vehicle according to the present preferred embodiment. The motorcycle 1 is a "street type" motorcycle. Note that the straddle-type vehicle according to the present teaching may be any other type of motorcycle such as an "off-road type", "scooter type", or "moped type" motorcycle, for example. In other words, the straddle-type vehicle according to the present teaching is not limited to the motorcycle 1. The straddle-type vehicle according to the present teaching may alternatively be an ATV or four-wheeler, for example.

As illustrated in FIG. 1, the motorcycle 1 preferably includes a front fork 10 and a body frame 6. The body frame 6 is connected with a front end portion of a rear arm 21 via a pivot shaft (not illustrated). The rear arm 21 is supported by the pivot shaft so as to be swingable up and down. A rear wheel 23 is supported by a rear end portion of the rear arm 21.

A fuel tank 13 is disposed at an upper portion of the body frame 6. The seat 14 on which the rider sits is disposed rearward of the fuel tank 13.

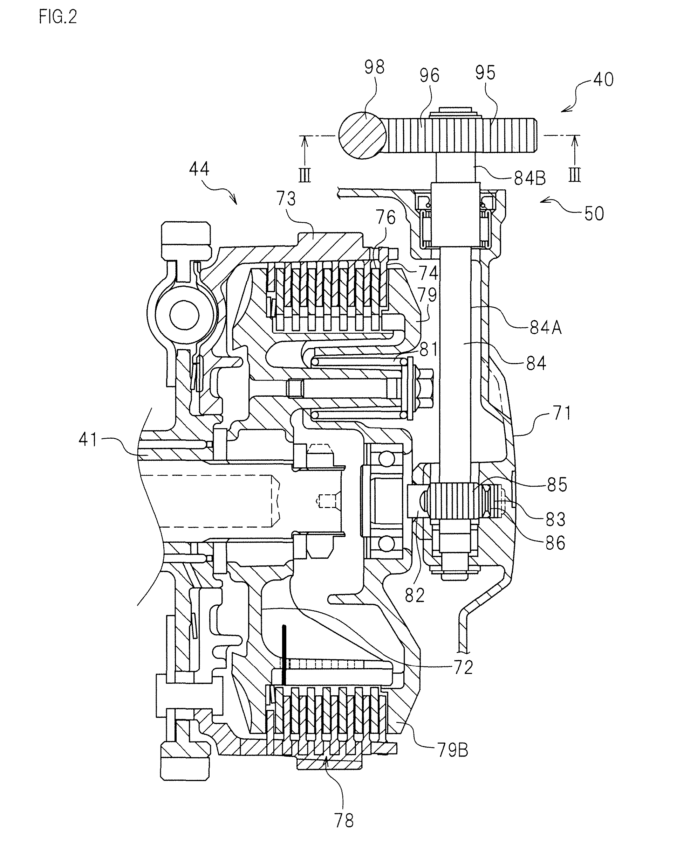

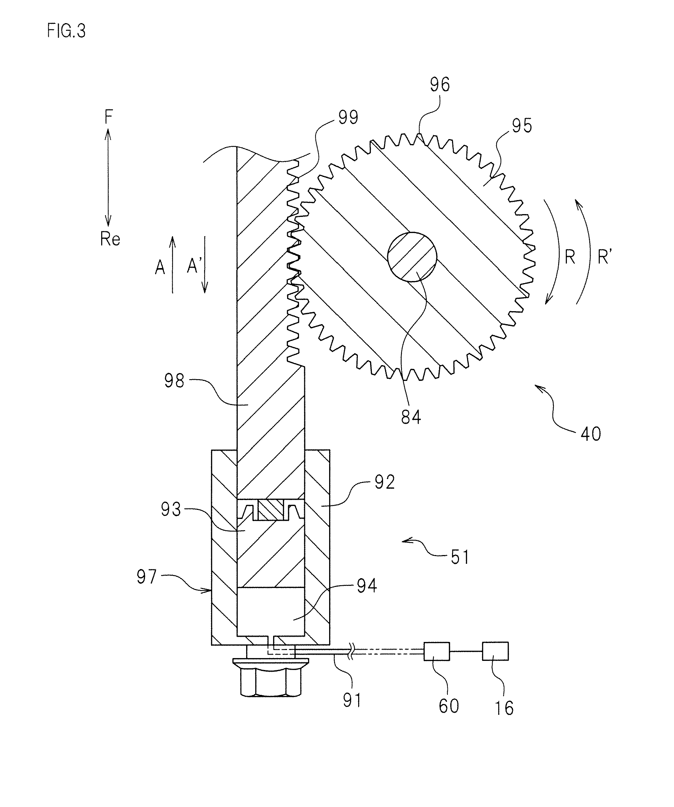

A handlebar 4 is provided at an upper end of the front fork 10. A grip 15 and a clutch lever 16 are attached to one end of the handlebar 4. The rider operates the clutch lever 16, thus engaging and disengaging a clutch 44 (see FIG. 2) via a hydraulic mechanism 51 (see FIG. 3) described later. An accelerator grip (not illustrated) and a brake lever (not illustrated) are attached to the other end of the handlebar 4. A front wheel 12 is rotatably provided at a lower end of the front fork 10.

An engine 45 according to the present preferred embodiment is an internal combustion engine in which gasoline is used as a fuel. It is to be noted that the engine 45 is not limited to an internal combustion engine such as a gasoline engine, but may be a motor engine, for example. Alternatively, the engine 45 may be a combination of a gasoline engine and a motor engine.

The engine 45 includes a crankshaft (not illustrated). The crankshaft is contained in a crankcase 46. The crankcase 46 also contains the clutch 44 (see FIG. 2). Note that the crankcase 46 according to the present preferred embodiment is an example of a case according to the present teaching.

Next, a clutch device 40 according to the present preferred embodiment will be described. FIG. 2 is a cross-sectional view illustrating the clutch device 40 according to the present preferred embodiment. As illustrated in FIG. 2, the clutch device 40 includes the clutch 44, a clutch operation mechanism 50, and a clutch shaft 41. The clutch shaft 41 is connected to the crankshaft via the clutch 44. When the clutch 44 is engaged, the clutch shaft 41 rotates together with the crankshaft. The clutch shaft 41 extends in a lateral direction in FIG. 2. In other words, the clutch shaft 41 extends in a vehicle width direction. Note that in the present preferred embodiment, the clutch device 40 is disposed at a right portion of the motorcycle 1, i.e., at a right portion of FIG. 2. Alternatively, the clutch device 40 may be disposed at a left portion of the motorcycle 1, i.e., at a left portion of FIG. 2.

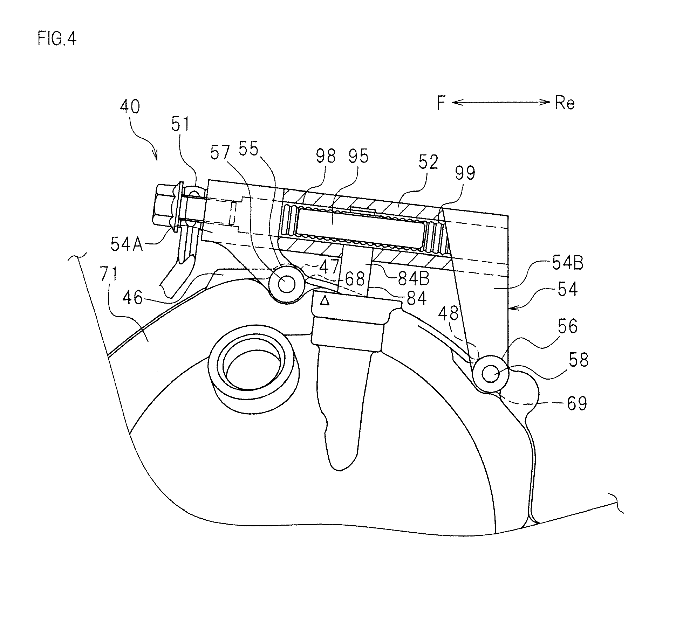

The clutch 44 according to the present preferred embodiment is a wet multiplate friction clutch, for example. It is to be noted that the clutch 44 is not limited to any particular type of clutch, but may be a dry clutch or a single plate clutch. The clutch 44 is disposed inward of a clutch cover 71. The clutch cover 71 serves as a cover that defines space in which the clutch 44 is disposed. The clutch cover 71 is attached to the crankcase 46 (see FIG. 4). The clutch cover 71 covers the clutch 44. The clutch 44 preferably includes a clutch boss 72, and a clutch housing 73 disposed around the clutch boss 72. A plurality of friction plates 74 are provided inward of the clutch housing 73. A plurality of clutch plates 76 are provided outward of the clutch boss 72. The friction plates 74 and the clutch plates 76 are arranged alternately in an axial direction of the clutch shaft 41.

Each friction plate 74 is engaged with the clutch housing 73. Each friction plate 74 is fixed to the clutch housing 73 with respect to a rotational direction of the clutch shaft 41. Therefore, the plurality of friction plates 74 rotate together with the clutch housing 73. Note that the plurality of friction plates 74 can be displaced with respect to the axial direction of the clutch shaft 41. The plurality of friction plates 74 are arranged in the axial direction of the clutch shaft 41.

Each clutch plate 76 faces the associated friction plate 74 adjacent thereto. Each clutch plate 76 is engaged with the clutch boss 72. Each clutch plate 76 is fixed to the clutch boss 72 with respect to the rotational direction of the clutch shaft 41. Therefore, the plurality of clutch plates 76 rotate together with the clutch boss 72. Note that the plurality of clutch plates 76 can be displaced with respect to the axial direction of the clutch shaft 41. In the present preferred embodiment, the plurality of friction plates 74 and the plurality of clutch plates 76 constitute a plate group 78.

As illustrated in FIG. 2, a pressure plate 79 is disposed outward of the clutch shaft 41 (i.e., rightward of the clutch shaft 41 in FIG. 2) in the vehicle width direction. The pressure plate 79 is disposed outward of the plate group 78 in the vehicle width direction. The pressure plate 79 has a substantially disk-like shape. A pressing portion 79B is provided at a radially outward region of the pressure plate 79 so as to be protruded toward the plate group 78. The pressing portion 79B faces the rightmost friction plate 74 of the plate group 78.

The clutch 44 is provided with a spring 81. The spring 81 urges the pressure plate 79 inward (i.e., leftward in FIG. 2) in the vehicle width direction. In other words, the spring 81 urges the pressure plate 79 in a direction in which the pressing portion 79B presses the plate group 78.

The pressure plate 79 preferably includes a clutch release rack 82. The pressure plate 79 and the clutch release rack 82 are separate components. Both of the pressure plate 79 and the clutch release rack 82 are rotatable. The clutch release rack 82 is movable together with the pressure plate 79 in the vehicle width direction, i.e., in a longitudinal direction of the clutch release rack 82. Note that the clutch release rack 82 may be integral with the pressure plate 79. The clutch release rack 82 is provided with grooves 83. The grooves 83 may be provided at a surface of the clutch release rack 82 facing a pinion 85 of a pinion shaft 84 described later. Alternatively, the grooves 83 may be provided at both surfaces of the clutch release rack 82.

The clutch operation mechanism 50 of the clutch device 40 preferably includes the pinion shaft 84. The pinion shaft 84 extends vertically. It is to be noted that the pinion shaft 84 does not necessarily have to extend vertically. A longitudinal direction of the pinion shaft 84 and a longitudinal direction of the clutch shaft 41 are perpendicular to each other. The pinion shaft 84 is perpendicular to the clutch release rack 82. The pinion shaft 84 is rotatable about the longitudinal direction of the pinion shaft 84. The pinion shaft 84 preferably includes an inner portion 84A and an outer portion 84B. The inner portion 84A of the pinion shaft 84 is covered with the clutch cover 71. The outer portion 84B of the pinion shaft 84 is not covered with the clutch cover 71. The inner portion 84A of the pinion shaft 84 is located inward of the clutch cover 71. The outer portion 84B of the pinion shaft 84 is located outward of the clutch cover 71. In other words, the pinion shaft 84 passes through the clutch cover 71. Note that the pinion shaft 84 in the present preferred embodiment is an example of an operation shaft according to the present teaching.

The pinion 85 is provided at a lower portion of the pinion shaft 84 (i.e., a lower portion thereof in FIG. 2). In other words, the pinion 85 is provided at the inner portion 84A of the pinion shaft 84. The pinion 85 is covered with the clutch cover 71 similarly to the inner portion 84A of the pinion shaft 84. The pinion 85 has a substantially disk-like shape. Grooves 86 are provided at a lateral surface of the pinion 85. Note that the pinion 85 may be integral with the pinion shaft 84 as in the present preferred embodiment, or the pinion 85 and the pinion shaft 84 may alternatively be separate components.

The grooves 86 of the pinion 85 of the pinion shaft 84 and the grooves 83 of the clutch release rack 82 intermesh with each other. Therefore, a force generated by rotation of the pinion shaft 84, i.e., rotational motion of the pinion shaft 84, is transmitted to the clutch release rack 82 via the pinion 85. Thus, a linear motion force is exerted on the clutch release rack 82, thereby moving the clutch release rack 82 in the vehicle width direction. In other words, the clutch release rack 82 moves outward of the clutch shaft 41. In this preferred embodiment, the clutch release rack 82 and the pinion 85 are disposed between the pinion shaft 84, i.e., the operation shaft, and the pressure plate 79. The clutch release rack 82 and the pinion 85 convert the rotational motion force of the pinion shaft 84 into the linear motion force of the clutch release rack 82. Specifically, the pinion 85 rotates concurrently with rotation of the pinion shaft 84, and the rotational motion force of the pinion 85 is transmitted to the clutch release rack 82 due to the intermeshing of the grooves 86 of the pinion 85 and the grooves 83 of the clutch release rack 82, thus moving the clutch release rack 82 in the vehicle width direction. Note that in the present preferred embodiment, there are provided two rack-and-pinion mechanisms, one of which is made up of the clutch release rack 82 and the pinion 85 and the other one of which is made up of a rack 98 and a pinion 95 described below.

The pinion 95 is attached to an upper portion of the pinion shaft 84 (i.e., an upper portion thereof in FIG. 2). In other words, the pinion 95 is attached to the outer portion 84B of the pinion shaft 84. The pinion 95 is not covered with the clutch cover 71. The pinion 95 is located outward of the clutch cover 71. The pinion 95 has a substantially disk-like shape. Grooves 96 are provided at a lateral surface of the pinion 95. In the present preferred embodiment, the pinion 95 and the pinion shaft 84 are separate components. Alternatively, the pinion 95 may be integral with the pinion shaft 84.

The pinion shaft 84 is connected to the rack 98 via the pinion 95. The rack 98 is disposed perpendicularly to the pinion shaft 84. The rack 98 is disposed in parallel with the clutch release rack 82.

FIG. 3 is a cross-sectional view taken along the line III-III of FIG. 2 and illustrating the rack 98, the pinion 95 and the hydraulic mechanism 51 according to the present preferred embodiment. As illustrated in FIG. 3, the rack 98 is provided with grooves 99. The grooves 99 of the rack 98 may be provided only at a surface of the rack 98 facing the pinion 95, or may be provided at both surfaces of the rack 98. The grooves 99 of the rack 98 intermesh with the grooves 96 of the pinion 95. Therefore, a force generated by longitudinal movement of the rack 98, i.e., linear motion of the rack 98, is transmitted to the pinion shaft 84 via the pinion 95. As a result, a rotational motion force is exerted on the pinion shaft 84, thus rotating the pinion shaft 84.

FIG. 4 is a diagram illustrating a housing 52 according to the present preferred embodiment which is attached to the clutch cover 71, with a portion of the housing 52 being cut away. As illustrated in FIG. 4, the rack 98 and the pinion 95 are contained in the housing 52. The housing 52 covers the rack 98 and the pinion 95. In the present preferred embodiment, the housing 52 entirely covers the rack 98 and the pinion 95, and partially covers the outer portion 84B of the pinion shaft 84. The housing 52 may alternatively cover only a portion of the rack 98 and a portion of the pinion 95. The housing 52 may alternatively cover only the rack 98. In other words, the housing 52 does not necessarily have to cover the pinion 95. In the present preferred embodiment, the housing 52 consists of a single member, but may alternatively consist of two or more members. When the housing 52 consists of two members, the rack 98 and the pinion 95 may be covered with the different members of the housing 52. The housing 52 does not necessarily have to be provided for a surface of the pinion 95 to which the pinion shaft 84 is attached. The housing 52 may be provided for only a portion of the surface of the pinion 95 to which the pinion shaft 84 is attached. The housing 52 is not limited to any particular shape as long as it covers the rack 98 and the pinion 95. For example, the housing 52 has a rectangular cylindrical shape. Note that the housing 52 in the present preferred embodiment is an example of a container member according to the present teaching.

As illustrated in FIG. 4, a stay 54 is attached to the housing 52. The stay 54 serves as a member that supports the housing 52, i.e., the rack 98 and the pinion 95. The stay 54 may be integral with the housing 52, or may be separate from the housing 52. In the present preferred embodiment, the housing 52 is attached to one end portion of the stay 54. The stay 54 preferably includes a first stay 54A and a second stay 54B. In FIG. 4, the first stay 54A is located leftward of the pinion shaft 84, and the second stay 54B is located rightward of the pinion shaft 84. The pinion shaft 84 is located between the first and second stays 54A and 54B. Note that the stay 54 in the present preferred embodiment is an example of a support member according to the present teaching. The first and second stays 54A and 54B are examples of first and second support members according to the present teaching, respectively.

An end portion of the first stay 54A is provided with a first attachment hole 55. An end portion of the second stay 54B is provided with a second attachment hole 56. The first attachment hole 55 is located leftward of the pinion shaft 84 in FIG. 4. The second attachment hole 56 is located rightward of the pinion shaft 84 in FIG. 4. The pinion shaft 84 is located between the first and second attachment holes 55 and 56.

The crankcase 46 is provided with crankcase attachment holes 47 and 48. The clutch cover 71 is provided with clutch cover attachment holes 68 and 69. A distance between the crankcase attachment holes 47 and 48 and a distance between the clutch cover attachment holes 68 and 69 are equal to each other. Therefore, the crankcase attachment hole 47 and the clutch cover attachment hole 68 can be overlapped with each other, and the crankcase attachment hole 48 and the clutch cover attachment hole 69 can be overlapped with each other. Bolts 57 and 58 are each inserted into the associated attachment hole, thus fixing the crankcase 46 and the clutch cover 71 to each other. Note that the crankcase 46 and the clutch cover 71 may alternatively be fixed to each other by a different method. For example, the crankcase 46 and the clutch cover 71 may be fixed to each other by welding, bonding, crimping, etc. In the present preferred embodiment, the crankcase 46 and the clutch cover 71 are separate components. Alternatively, the crankcase 46 and the clutch cover 71 may be integral with each other.

In the present preferred embodiment, a distance between the first attachment hole 55 of the first stay 54A and the second attachment hole 56 of the second stay 54B, a distance between the crankcase attachment holes 47 and 48, and a distance between the clutch cover attachment holes 68 and 69 are equal to each other. Therefore, the first attachment hole 55 of the first stay 54A and the second attachment hole 56 of the second stay 54B can be further overlapped with the above-mentioned attachment holes used for fixation of the crankcase 46 and the clutch cover 71. Hence, the first and second stays 54A and 54B can be fixed to the crankcase 46 and the clutch cover 71. Specifically, the first attachment hole 55 of the first stay 54A is overlapped with a position at which the crankcase attachment hole 47 and the clutch cover attachment hole 68 are overlapped with each other, and in addition, the second attachment hole 56 of the second stay 54B is overlapped with a position at which the crankcase attachment hole 48 and the clutch cover attachment hole 69 are overlapped with each other. Then, the bolts 57 and 58 are inserted into the first and second attachment holes 55 and 56, respectively, thus fixing the first and second stays 54A and 54B to the crankcase 46 and the clutch cover 71. As illustrated in FIG. 4, the pinion shaft 84 is disposed between the bolts 57 and 58 when viewed in a direction perpendicular to an axial direction of the pinion shaft 84 and perpendicular to a longitudinal direction of the rack 98. As described above, the first and second stays 54A and 54B are fixed to the crankcase 46 and the clutch cover 71 via the bolts 57 and 58. Therefore, the first and second stays 54A and 54B can be detached by loosening the bolts 57 and 58 when necessary. Hence, the first and second stays 54A and 54B are detachably attached to the crankcase 46 and the clutch cover 71. Note that in the present preferred embodiment, the existing bolts by which the clutch cover 71 is fixed to the crankcase 46 are used as the bolts 57 and 58. However, when the existing bolts are used, the first and second stays 54A and 54B might not be fixed to the crankcase 46 and the clutch cover 71 due to insufficient lengths of the bolts. In that case, new bolts for fixation of the first and second stays 54A and 54B to the crankcase 46 and the clutch cover 71 may be prepared and used as the bolts 57 and 58, so that the first and second stays 54A and 54B are fixed to the crankcase 46 and the clutch cover 71. Note that the bolt 57 in the present preferred embodiment is an example of a first fixture according to the present teaching, and the bolt 58 in the present preferred embodiment is an example of a second fixture according to the present teaching.

Note that in the present preferred embodiment, the two stays, i.e., the first and second stays 54A and 54B, constitute the stay 54, but the number of the stays constituting the stay 54 is not limited to any particular number. For example, a single stay may constitute the stay 54, or three or more stays may constitute the stay 54. In the present preferred embodiment, the stay 54 is fixed to the crankcase 46 and the clutch cover 71 by inserting the bolts into the two attachment holes, i.e., the first and second attachment holes 55 and 56. Alternatively, the number of the attachment holes of the stay 54 may be one, or may be three or more. The number of the attachment holes of the stay 54 may be set in accordance with the number of the crankcase attachment holes or the number of the clutch cover attachment holes. In the present preferred embodiment, the pinion shaft 84 is located between the first and second attachment holes 55 and 56 of the stay 54. It is also contemplated that the pinion shaft 84 may be located leftward of the first and second attachment holes 55 and 56 in FIG. 4. The pinion shaft 84 may alternatively be located rightward of the first and second attachment holes 55 and 56 in FIG. 4.

In the present preferred embodiment, the stay 54 is attached to the crankcase 46 and the clutch cover 71 with the use of the bolts 57 and 58 by which the crankcase 46 and the clutch cover 71 are attached to each other. It is also contemplated that the stay 54 may be fixed to the crankcase 46 or the clutch cover 71 with the use of dedicated bolts different from the bolts 57 and 58. Note that the bolts 57 and 58 are examples of the fixtures, and therefore, the fixtures are not limited to the bolts 57 and 58. It is also contemplated that the stay 54 may be fixed to the crankcase 46 or the clutch cover 71 with the use of other fixtures such as screws, for example. The stay 54 may alternatively be fixed to the crankcase 46 or the clutch cover 71 by welding, bonding, crimping, etc.

In the clutch device 40 according to the present preferred embodiment, the rack 98 is moved by the hydraulic mechanism 51. As illustrated in FIG. 3, the hydraulic mechanism 51 preferably includes a hydraulic cylinder 97. An oil tube 91 is connected to the hydraulic cylinder 97. The hydraulic cylinder 97 preferably includes a cylinder main body 92 and a spool 93. Space 94 that contains hydraulic oil is defined inside the cylinder main body 92. The oil tube 91 serves as a flow passage through which the hydraulic oil flows to the cylinder main body 92. The oil tube 91 is connected to one end of the cylinder main body 92. The spool 93 is inserted into the cylinder main body 92. The rack 98 is mounted on one end of the spool 93. In the present preferred embodiment, the spool 93 and the rack 98 are separate components.

In the hydraulic mechanism 51, the hydraulic oil flows into the cylinder main body 92 through the oil tube 91. The spool 93 is pushed by the hydraulic oil that has flowed into the cylinder main body 92. Since the spool 93 is pushed, a force is exerted on the rack 98 in a direction A, thus moving the rack 98 in the direction A. In this case, the pinion 95 is rotated in a direction R because the grooves 99 of the rack 98 and the grooves 96 of the pinion 95 are intermeshing with each other. Note that although the rack 98 is moved in the direction A by a force that pushes the spool 93 in the present preferred embodiment, the hydraulic mechanism 51 may alternatively be adapted so that the rack 98 is moved in the direction A by a force that pulls the spool 93.

Upon cessation of the flow of the hydraulic oil from the oil tube 91, the pinion 95 is rotated in a direction R' opposite to the direction R as described later. Thus, a force is exerted on the rack 98 in a direction A', thereby moving the rack 98 in the direction A'. In this case, the spool 93 is pushed back due to the movement of the rack 98 in the direction A'.

In the present preferred embodiment, the flow of the hydraulic oil into the cylinder main body 92 is adjusted by a clutch actuator 60. In the present preferred embodiment, the clutch actuator 60 preferably includes a hydraulic pump. As illustrated in FIG. 1, the clutch actuator 60 is provided above the engine 45 and below the fuel tank 13, for example. As illustrated in FIG. 3, the clutch actuator 60 is connected to the oil tube 91 of the hydraulic mechanism 51 and to the clutch lever 16. The clutch 44 is driven by controlling the hydraulic mechanism 51 by the clutch actuator 60. In the present preferred embodiment, the clutch actuator 60 is the hydraulic pump that is driven by an electronic motor. However, a driving source for the clutch actuator 60 is not limited to an electronic motor. Although the clutch actuator 60 is operated by the clutch lever 16 in the present preferred embodiment, the clutch actuator 60 may alternatively be controlled automatically by a controller without the use of the clutch lever 16. In other words, the clutch 44 may be disengaged automatically. The clutch operation mechanism 50 may alternatively be adapted so that the clutch 44 is disengaged by operating the clutch lever 16 without the use of the clutch actuator 60.

Upon driving of the clutch actuator 60, the hydraulic oil is supplied through the oil tube 91 to the space 94 surrounded by the spool 93 and the cylinder main body 92. As mentioned above, upon supply of the hydraulic oil to the space 94, the spool 93 is pushed and moved in the direction A. Thus, the rack 98 is also moved in the direction A, and the pinion 95 is rotated in the direction R. Then, as illustrated in FIG. 2, the clutch release rack 82 moves rightward in FIG. 2 via the pinion shaft 84 and the pinion 85. When the clutch release rack 82 is pulled rightward in FIG. 2, the pressure plate 79 moves rightward in FIG. 2. Consequently, the pressing portion 79B of the pressure plate 79 goes away from the plate group 78. With the pressing portion 79B located away from the plate group 78, each friction plate 74 and the associated clutch plate 76 are not pressed against each other. A slight gap is provided between each friction plate 74 and the associated clutch plate 76. Therefore, a frictional force that enables transmission of a driving force is not generated between each friction plate 74 and the associated clutch plate 76. As a result, the clutch 44 is disengaged.

Conversely, when the clutch 44 is engaged, a force that pulls the pressure plate 79 is lost, so that the pressure plate 79 is moved leftward in FIG. 2 by the spring 81. Upon leftward movement of the pressure plate 79 in FIG. 2, the pressing portion 79B presses the plate group 78 leftward. Therefore, the friction plates 74 and the clutch plates 76 of the plate group 78 are pressed against each other. As a result, the clutch 44 is engaged. Upon leftward movement of the pressure plate 79 in FIG. 2, the clutch release rack 82 also moves leftward in FIG. 2. Then, as illustrated in FIG. 3, the pinion 95 is rotated in the direction R' via the pinion 85 and the pinion shaft 84. In accordance with the rotation of the pinion 95 in the direction R', the rack 98 moves in the direction A'. The spool 93 is pushed back by the movement of the rack 98 in the direction A'.

Thus, the pressure plate 79 moves in one direction or the other direction along an axis of the clutch shaft 41 in accordance with the magnitude of a driving force of the clutch actuator 60 and an urging force of the spring 81. The clutch 44 is engaged or disengaged in response to the movement of the pressure plate 79.

As described above, the clutch device 40 according to the present preferred embodiment preferably includes: the clutch cover 71 disposed outward of the clutch 44; the pinion shaft 84 that engages and disengages the clutch 44 by being rotated; the pinion 95; the rack 98; and the hydraulic mechanism 51. The pinion shaft 84 preferably includes: the inner portion 84A disposed inside the clutch cover 71 and connected to the clutch 44; and the outer portion 84B disposed outside the clutch cover 71. The pinion 95 is provided at the outer portion 84B of the pinion shaft 84, and the grooves 96 are provided at the lateral surface of the pinion 95. The rack 98 preferably includes the grooves 99 that intermesh with the grooves 96 of the pinion 95. The hydraulic mechanism 51 moves the rack 98 in the longitudinal direction of the rack 98.

Conventional clutch operation mechanisms include an "outer-pull-type clutch operation mechanism" and an "inner-push-type clutch operation mechanism". As mentioned above, the term "outer-pull-type clutch operation mechanism" refers to a mechanism that disengages a clutch by pulling a pressure disk with the use of a member located outward of a clutch shaft. Meanwhile, the term "inner-push-type clutch operation mechanism" refers to a mechanism that disengages a clutch by pushing a pressure disk with the use of a member located inward of a clutch shaft. In an inner-push-type clutch operation mechanism, a hydraulic mechanism such as a hydraulic cylinder is used in order to solve a problem such as degradation in clutch operability resulting from wire elongation or wire degradation over time which occurs in a conventional clutch operation mechanism that uses a wire. Advantages of the use of a hydraulic mechanism include: an advantage that resistance to degradation over time and environmental change is achieved; an advantage that a high degree of flexibility in location is provided; and an advantage that a clutch operating force may be small compared with a clutch operation mechanism that uses a wire.

However, in a conventional outer-pull-type clutch operation mechanism that uses a wire, it is difficult to use a hydraulic mechanism instead of a wire. In a conventional outer-pull-type clutch operation mechanism that uses a wire, a clutch is disengaged by utilizing a rotational motion force of a pinion shaft (operation shaft). A hydraulic mechanism is a mechanism that utilizes a force of hydraulic oil by which a spool is pushed, i.e., a linear motion force. Hence, it is difficult to use a hydraulic mechanism in an outer-pull-type clutch operation mechanism because it is inherently necessary to convert a linear motion force into a rotational motion force. However, as in the present preferred embodiment, the pinion 95 and the rack 98 are disposed outward of the clutch cover 71 and between the pinion shaft 84 and the hydraulic mechanism 51, thus making it possible to facilitate the use of the hydraulic mechanism 51 in the outer-pull-type clutch operation mechanism 50.

The clutch operation mechanism 50 according to the present preferred embodiment prevents problems resulting from wire elongation or wire degradation over time which occurs in using a conventional outer-pull-type clutch operation mechanism, i.e., an outer-pull-type clutch operation mechanism that uses a wire. As a result, stabilization of operability of the clutch 44 can be achieved.

In a conventional outer-pull-type clutch operation mechanism that uses a wire, an operation shaft is rotated by a wire, and therefore, a clutch is disengaged by pulling the wire. The wire is moved while being pulled. Hence, such a conventional clutch operation mechanism requires space for placement of the wire and movement space for pulling of the wire. However, in the outer-pull-type clutch operation mechanism that uses the hydraulic mechanism 51 according to the present preferred embodiment, only the rack 98 is moved linearly by the hydraulic mechanism 51 in order to rotate the operation shaft (pinion shaft), and therefore, no space for movement of the hydraulic mechanism 51 is required.

In the present preferred embodiment, the pinion shaft 84 and the pinion 95 are separate components. Thus, the clutch operation mechanism 50 according to the present preferred embodiment can be fabricated by utilizing a conventional outer-pull-type clutch operation mechanism that uses a wire. Specifically, a wire-pulling operation part of a conventional outer-pull-type clutch operation mechanism is detached from a pinion shaft. Then, the pinion 95 according to the present preferred embodiment is attached to a portion of the pinion shaft from which the operation part has been detached. Subsequently, the hydraulic mechanism 51 is connected to the pinion 95 via the rack 98, thus providing the clutch operation mechanism 50 according to the present preferred embodiment.

As illustrated in FIG. 4, in the present preferred embodiment, the clutch device 40 preferably includes the housing 52 that contains the rack 98 and the pinion 95. The pinion 95 is larger in width than the rack 98. Therefore, the pinion 95 is more likely to collide against other components than the rack 98. Furthermore, the intermeshing of the grooves 96 of the pinion 95 and the grooves 99 of the rack 98 might be degraded due to adhesion of dust or the like to the grooves 96 of the pinion 95 or the grooves 99 of the rack 98. To cope with this, the rack 98 and the pinion 95 are contained in the housing 52, thus making it possible to proactively prevent collision of the pinion 95 and the rack 98 against other components, and degradation in intermeshing of the grooves 96 of the pinion 95 and the grooves 99 of the rack 98 caused by dust or the like.

In the present preferred embodiment, the stay 54 is attached to the clutch cover 71 and the crankcase 46 with the use of the bolts 57 and 58 used for fixation of the clutch cover 71 and the crankcase 46. Thus, the stay 54 can be fixed to the clutch cover 71 and the crankcase 46 by utilizing the existing bolts 57 and 58 used for fixation of the clutch cover 71 and the crankcase 46.

In the present preferred embodiment, the stay 54 is detachably attached to the clutch cover 71 and the crankcase 46. Thus, for example, when maintenance is performed on the pinion 95 or the rack 98 or when the pinion 95 or the rack 98 is broken, the housing 52 that contains the pinion 95 and the rack 98 can be easily detached.

In the present preferred embodiment, as illustrated in FIG. 4, the pinion shaft 84 is disposed between the bolt 57 (first fixture) and the bolt 58 (second fixture) when viewed in the direction perpendicular to the axial direction of the pinion shaft 84 and perpendicular to the longitudinal direction of the rack 98. Thus, the housing 52 is fixed to the crankcase 46 or the clutch cover 71 by the bolts 57 and 58 on opposite sides of the pinion shaft 84. Hence, the housing 52 can be fixed with stability.

In the present preferred embodiment, the clutch device 40 preferably includes the clutch actuator 60 that drives the hydraulic mechanism 51. In a conventional outer-pull-type clutch operation mechanism that uses a wire, a clutch is disengaged by pulling the wire, and therefore, a large force is required to pull the wire. However, when the hydraulic mechanism 51 is driven by the clutch actuator 60 as in the present preferred embodiment, a force required for clutch disengagement can be reduced.

### Alternative Preferred Embodiment

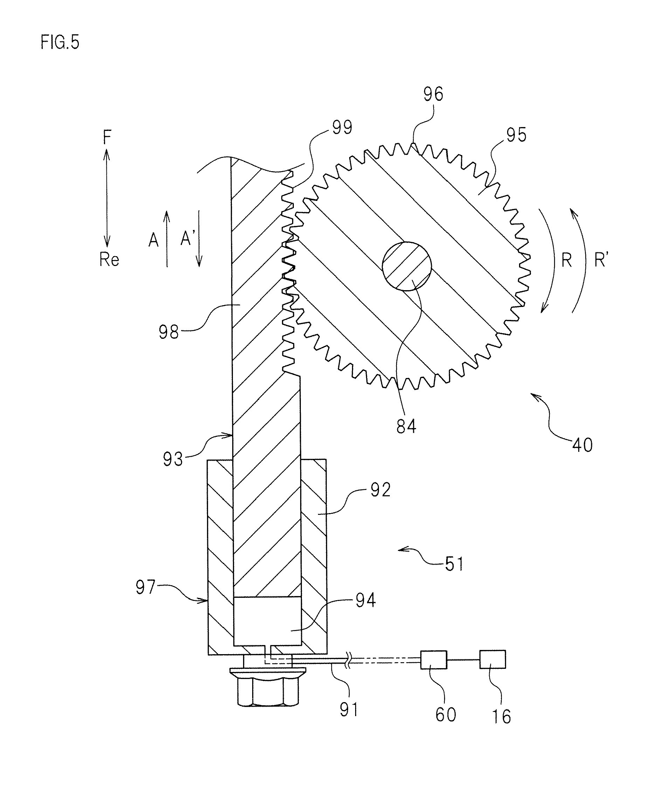

The rack 98 and the spool 93 of the hydraulic mechanism 51 are separate components in the first preferred embodiment. Alternatively, the rack 98 and the spool 93 of the hydraulic mechanism 51 may be integral with each other. FIG. 5 is a cross-sectional view illustrating the rack 98, the pinion 95 and the hydraulic mechanism 51 according to an alternative preferred embodiment of the present teaching. As illustrated in FIG. 5, a portion of the spool 93 constitutes the rack 98. Specifically, the rack 98 is provided in a portion of the spool 93 protruded from the cylinder main body 92. Thus, the number of components is reduced as compared with a case where the rack 98 separate from the spool 93 is attached to the spool 93, and in addition, the clutch device 40 according to the present teaching can be easily fabricated.

### REFERENCE SIGNS LIST

- 1: motorcycle (straddle-type vehicle)
- 40: clutch device
- 44: clutch
- 50: clutch operation mechanism
- 51: hydraulic mechanism
- 52: housing (container member)
- 54: stay (support member)
- 57: bolt (first fixture)
- 58: bolt (second fixture)
- 71: clutch cover
- 84: pinion shaft (operation shaft)
- 95: pinion
- 98: rack

## Claims

1. A clutch device comprising:
a clutch cover (71);
a clutch (44) disposed inside the clutch cover (71);
an operation shaft (84) that comprises an inner portion disposed inside the clutch cover (71) and connected to the clutch (44), and an outer portion disposed outside the clutch cover (71), and that engages and disengages the clutch (44) by being rotated;
a pinion (95) mounted on the outer portion of the operation shaft (84) and
provided with a groove (96);
a rack (98) comprising a groove (99) that intermeshes with the groove (96) of the pinion (95); **characterized in that**,
a hydraulic mechanism (51) moves the rack (98) in a longitudinal direction of the rack (98).

2. A clutch device according to claim 1, further comprising a container member (52) that contains the rack (98) and the pinion (95).

3. A clutch device according to claim 2, further comprising a case (46) that contains the clutch (44); and
at least one support member (54,54A,54B) that is attached to the container member (52) or integral with the container member (52), thus supporting the container member (52).

4. A clutch device according to claim 3, wherein the support member (54,54A,54B) is detachably attached to at least one of the clutch cover (71) and the case (46).

5. A clutch device according to claim 3 or 4, wherein the clutch cover (71) is provided with at least one attachment hole (68,69),
the case (46) that contains the clutch (44) is provided with at least one attachment hole (47,48);
at least one fixture (57,58) that is inserted into the attachment hole (47,48) of the clutch cover (71) and the attachment hole (47,48) of the case (46), thus attaching the clutch cover (71) to the case (46); and
wherein the support member (54,54A,54B) is provided with at least one attachment hole (55,56) into which the fixture (57,58) is to be inserted, and wherein the fixture (57,58) is inserted into the attachment hole (68,69) of the clutch cover (71), the attachment hole (47,48) of the case (46) and the attachment hole (55,56) of the support member (54,54A,54B), thus attaching the support member (54,54A,54B) to the case (46) along with the clutch cover (71).

6. A clutch device according to at least one of the claim 2 to 5, comprising:
first and second support members (54A,54B) that are attached to the container member (52) or integral with the container member (52), thus supporting the container member (52);
a first fixture (57) for attachment of the first support member (54A) to the case (46) or the clutch cover (71); and
a second fixture (58) for attachment of the second support member (54B) to the case (46) or the clutch cover (71),
wherein the operation shaft (84) is disposed between the first and second fixtures (57,58) when viewed in a direction perpendicular to an axial direction of the operation shaft (84) and perpendicular to the longitudinal direction of the rack (98).

7. A clutch device according to at least one of the claim 2 to 6, wherein the hydraulic mechanism (51) comprises a cylinder main body (92), and a spool (93) inserted into the cylinder main body (92), and wherein a portion of the spool (93) constitutes the rack (98).

8. A clutch device according to at least one of the claim 2 to 7, further comprising an actuator (60) that drives the hydraulic mechanism (51).

9. A straddle-type vehicle comprising the clutch device according to at least one of the claim 1 to 8.

## Patentansprüche

1. Eine Kupplungsvorrichtung mit:
einer Kupplungsabdeckung (71);
einer Kupplung (44) angeordnet in der Kupplungsabdeckung (71);
einer Betätigungswelle (84), die einen inneren Abschnitt angeordnet innerhalb der Kupplungsabdeckung (71) und Verbunden mit der Kupplung (44), und einen äußeren Abschnitt angeordnet außerhalb der Kupplungsabdeckung (71) aufweist, und welche die Kupplung (44) in Eingriff und außer Eingriff bringt, dadurch das sie gedreht wird;
einem Ritzel (95) montiert an dem äußeren Abschnitt der Betätigungswelle (84) und mit einer Nut (96) ausgebildet;
einer Zahnstange (98), die eine Nut (99) aufweist, die mit der Nut (96) des Ritzels (95) zusammengreift; **dadurch gekennzeichnet, dass**
ein Hydraulikmechanismus (51) die Zahnstange (98) in Längsrichtung der Zahnstange (98) bewegt.

2. Eine Kupplungsvorrichtung gemäß Anspruch 1, die weiterhin aufweist ein Aufnahmeelement (52), welches die Zahnstange (98) und das Ritzel (95) aufnimmt.

3. Eine Kupplungsvorrichtung gemäß Anspruch 2, die weiterhin aufweist ein Gehäuse (46), welches die Kupplung (44) aufnimmt; und
zumindest ein Lagerelement (54, 54A, 54B), welches an dem Aufnahmeelement (52) angebracht ist oder mit dem Aufnahmeelement (52) integral ist, so dass das Aufnahmeelement (52) gelagert ist.

4. Eine Kupplungsvorrichtung gemäß Anspruch 3, wobei das Lagerelement (54, 54A, 54B) lösbar an zumindest einem von der Kupplungsabdeckung (71) und dem Gehäuse (46) angebracht ist.

5. Eine Kupplungsvorrichtung nach gemäß Anspruch 3 oder 4, wobei die Kupplungsabdeckung (71) mit zumindest einem Befestigungsloch (68, 69) ausgebildet ist,
das Gehäuse (46), welches die Kupplung (44) aufnimmt, ist mit zumindest einem Befestigungsloch (47, 48) ausgebildet;
zumindest eine Fixierung (57, 58) ist in das Befestigungsloch (47, 48) der Kupplungsabdeckung (71) und dem Befestigungsloch (47, 48) des Gehäuses (46) eingesetzt, wodurch die Kupplungsabdeckung (71) an dem Gehäuse (46) angebracht ist; und wobei das Lagerelement (54, 54A, 54B) mit zumindest einem Befestigungsloch (55, 56) ausgebildet ist, in das die Fixierung (57, 58) einzusetzen ist, und
wobei die Fixierung (57, 58) in das Befestigungsloch (68, 69) der Kupplungsabdeckung (71), in das Befestigungsloch (47, 48) des Gehäuses (46) und in das Befestigungsloch (55, 56) des Lagerelements (54, 54A, 54B) eingesetzt ist, wodurch das Lagerelement (54, 54A, 54B) an dem Gehäuse (46) zusammen mit der Kupplungsabdeckung (71) angebracht ist.

6. Eine Kupplungsvorrichtung gemäß zumindest einem der Ansprüche 2 bis 5, mit:
ersten und zweiten Lagerelementen (54A, 54B), die an dem Aufnahmeelement (52) angebracht sind oder einstückig mit dem Aufnahmeelement (52) sind, wodurch das Aufnahmeelement (52) gelagert ist;
einer erste Fixierung (57) zum Anbringen des ersten Lagerelemente (54A) an dem Gehäuse (46) oder der Kupplungsabdeckung (71); und
einer zweiten Fixierung (58) zum Anbringen des zweiten Lagerelements (54B) an dem Gehäuse (46) oder Kupplungsabdeckung (71), wobei die Betätigungswelle (84) zwischen der ersten und zweiten Fixierung (57, 58) angeordnet ist, wenn in eine Richtung senkrecht zu der Axialrichtung der Betätigungswelle (84) und senkrecht zu der Längsrichtung der Zahnstange (98) betrachtet.

7. Eine Kupplungsvorrichtung gemäß zumindest einem der Ansprüche 2 bis 6, wobei der Hydraulikmechanismus (51) einen Zylinderhauptkörper (92) und einen Schieber (93) eingesetzt in den Zylinderhauptkörper (92) aufweist, und wobei ein Abschnitt des Schiebers (93) die Zahnstange (98) bildet.

8. Eine Kupplungsvorrichtung gemäß zumindest einem der Ansprüche 2 bis 7, die weiterhin aufweist einen Betätiger (60), der den Hydraulikmechanismus (51) antreibt.

9. Ein Spreiz-Sitz-Typ-Fahrzeug mit einer Kupplungsvorrichtung gemäß zumindest einem der Ansprüche 1 bis 8.

## Revendications

1. Dispositif d'embrayage comprenant :
- une couverture d'embrayage (71) ;
- un embrayage (44) disposé à l'intérieur de la couverture d'embrayage (71) ;
- un arbre d'actionnement (84) comprenant une partie intérieure disposée à l'intérieur de la couverture d'embrayage (71) et connecté à l'embrayage (44), et une partie extérieure disposée à l'extérieur de la couverture d'embrayage (71) et engageant et désengageant l'embrayage (44) en étant entrainée en rotation ;
- un pignon (95) monté sur la partie extérieure de l'arbre d'actionnement (84) et pourvu d'une rainure (96) ;
- une crémaillère (98) comprenant une rainure (99) venant en prise mutuelle avec la rainure (96) du pignon (95) :
- **caractérisé en ce que** :
- un mécanisme hydraulique (51) déplace la crémaillère (98) dans une direction longitudinale de cette crémaillère (98).

2. Dispositif d'embrayage selon la revendication 1, comprenant en outre un élément conteneur (52) contenant la crémaillère (98) et le pignon (95).

3. Dispositif d'embrayage selon la revendication 2, comprenant en outre un carter (46) contenant l'embrayage (44) ; et
- au moins un élément de support (54, 54A, 54B) fixé à l'élément conteneur (52) ou intégral avec l'élément conteneur (52), supportant ainsi l'élément conteneur (52).

4. Dispositif d'embrayage selon la revendication 3, dans lequel l'élément de support (54, 54A, 54B) est fixé de manière amovible à au moins une pièce parmi la couverture d'embrayage (71) et le carter (46).

5. Dispositif d'embrayage selon les revendications 3 ou 4, dans lequel la couverture d'embrayage (71) est pourvu d'au moins un trou de fixation (68, 69) ;
- le carter (46) contenant l'embrayage (44) est pourvu d'au moins un trou de fixation (47, 48) ;
- au moins une pièce de fixation (57, 58) inséré dans le trou de fixation (47, 48) de la couverture d'embrayage (71) et le trou de fixation du carter (46), fixant ainsi la couverture d'embrayage (71) au carter (46) ; et
- dans lequel l'élément de support (54, 54A, 54B) est pourvu d'au moins un trou de fixation (55, 56) dans lequel la pièce de fixation (57, 58) doit être insérée et dans lequel la pièce de fixation (57, 58) est insérée dans le trou de fixation (68, 69) de la couverture d'embrayage (71), le trou de fixation (47, 48) du carter (46) et le trou de fixation (55, 56) de l'élément de support (54, 54A, 54B), fixant ainsi l'élément de support (54, 54A, 54B) au carter (46) de même que la couverture d'embrayage (71).

6. Dispositif d'embrayage selon au moins une des revendications 2 à 5, comprenant :
- des premier et second éléments de support (54A, 54B) fixés à l'élément conteneur (52) ou intégraux avec l'élément conteneur (52), supportant ainsi l'élément conteneur (52) ;
- une première pièce de fixation (57) pour fixer le premier élément de support (54A) au carter (46) ou à la couverture d'embrayage (71) ; et
- une seconde pièce de fixation (58) pour fixer le second élément de support (54B) au carter (46) ou à la couverture d'embrayage (71),
- dans lequel l'arbre d'actionnement (84) est disposé entre les première et seconde pièces de fixation (57, 58) lorsqu'il est vu dans une direction perpendiculaire à une direction axiale de l'arbre d'actionnement (84) et perpendiculaire à la direction longitudinale de la crémaillère (98).

7. Dispositif d'embrayage selon au moins une des revendications 2 à 6, dans lequel le mécanisme hydraulique (51) comprend un corps de maitre cylindre (92) et un tiroir (93) inséré dans le corps de maitre cylindre (92) et dans lequel une partie du tiroir (93) constitue la crémaillère (98).

8. Dispositif d'embrayage selon au moins une des revendications 2 à 7, comprenant en outre un actionneur (60) qui entraine le mécanisme hydraulique (51).

9. véhicule de type monté à califourchon, comprenant un dispositif d'embrayage selon au moins une des revendications 1 à 8.
